(19)

Europäisches Patentamt
European Patent Office
Office européen des brevets

(11) **EP 2 357 804 A1**

(12) **EUROPEAN PATENT APPLICATION**

(43) Date of publication:
**17.08.2011 Bulletin 2011/33**

(21) Application number: **10193898.3**

(22) Date of filing: **07.12.2010**

(51) Int Cl.:
**H04N 5/445** (2011.01) **H04N 7/173** (2011.01)
**G06F 17/30** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.12.2009 TR 200909517**

(71) Applicant: **Vestel Elektronik Sanayi ve Ticaret A.S. 45030 Manisa (TR)**

(72) Inventors:
• **Cetin, Gorkem**
  **34469 Istanbul (TR)**
• **Tuncer, Bora**
  **34469 Istanbul (TR)**

(74) Representative: **Cayli, Hülya**
  **Paragon Consultancy Inc.**
  **Koza Sokak No: 63/2**
  **GOP**
  **06540 Ankara (TR)**

(54) **Personal TV content recommendation list generating method**

(57) Present invention explains a channel recommendation list method for IPTV applications. In said method, two main algorithms are used to generate recommendation list. One of said algorithms is based on users watching preferences according to present and past experiences. In described algorithm, users are clustered into groups according to present and past experiences. Moreover, the other algorithm is based on user's watching behaviour. In described algorithm, watching frequency of a channel for sampled days, for each user is calculated. By combining the results of said algorithms, a successful recommendation list is generated.

**EP 2 357 804 A1**

**Description**

Technical Field

This invention relates to a dynamically generated channel recommendation method based on clustering users according to present and past experiences in a given time interval and user's channel watching behavior for IPTV (Internet Protocol Television) applications.

**Prior Art**

IPTV (Internet Protocol Television) technology is a system through which digital television service is delivered using the architecture and networking methods of the Internet Protocol Suite over a packet-switched network infrastructure. By development of IPTV technology, many features such as leveraged end user experience, increased number of channels and third party services arise. After said development, finding related program by a user, become much more difficult. To accomplish said problem, EPG (Electronic Program Guide) which gives information about present and future programs has been introduced. However, because of overload information, EPG technology is not a usable navigation structure for user since there are various numbers of channels in broadcast and user does not have enough time to surf each channel in broadcast. Moreover, by observing channel rates, it can easily be detected that, people watch same program in a definite time interval for instance, news in the evening and movies at night. For this purpose, user habits should be taken into account to meet the user expectations. There are various approaches to accomplish said problem in prior art.

In patent document GB2343076 B, user profile determination method and apparatus is described. In said document, EPG technology is used to determine user profile. According to said document an apparatus which comprises a device for receiving broadcast material and a detector for detecting whether a viewer has watched a program for a predetermined length of time (e.g. half of a program) is defined. If the user has watched the program at least the required time, details of the program has stored in user action log. Said log is used over a period of time to develop a profile of viewer preferences and habits. Said profile is used to produce a virtual channel having a schedule of programs matching user preferences and also an adaptive program guide that shows all the available programs matching user preferences. Said schedule is prepared by searching keywords from EPG.

Another approach is explained in US20060179455 A1 patent document. In said document, a method for providing multi-media information using multiple item user preference information data structure to provide multi-media contents desired by users is described. Said method comprises the steps of: setting user preference information for the multi-media contents; searching the multi-media contents according to the user preference information; and providing users with multi-media contents according to the searching result. Said method is based on EPG application.

In another document US7167895 B1, a broadcast system, method and apparatus providing content on demand is described. The disclosed broadcast system includes a server that broadcasts meta-data which describes a plurality of data files that are to be broadcast or potentially broadcast later by the server, to a plurality of clients. Each client receives the broadcasted meta-data from the server and updates and maintains a local meta-data table and a content rating table. Based on the meta-data, previous access habits of the user and optional user classifications, the client system selectively receives and/or stores the data files that are later broadcast by the server. The client systems transmit back to the server ratings of each one of the data files described by the meta-data based on the user's previously accessed data files and optional user classifications. The server then determines the data files to be broadcast and the broadcast schedule based on the ratings received from the clients. Said method is also based on EPG application.

Another document, US 7509663 B2, describes a method and a system for identifying a favorite channel list for cable TV users. Each program channel in the favorites list is identified based on a measure of the duration in which the program channel is continuously tuned on. This measure varies nonlinearly with such a duration since user's channel preferences do not vary linearly with duration that a user spends on a program channel because of the watched program's duration. Thus, in method which is described in said document the modified duration measure affords a weight which varies inversely with the continuous duration that a user spends on a channel.

In document WO2006126988 A1, a method for arranging the channel list in EPG based on user preference data collected at different time intervals in a day is described. In the system, the apparatus comprises a memory operative to store first and second sets of user preference data collected at respective first and second time intervals in a day, and a processor operative to enable display of an electronic program guide including a list of channels. The channels are arranged in the list based on one of the first and second sets of user preference data. According to said method, said processor assigns points to channels during each time interval of the day, based primarily on the amount of time each channel is tuned to during each time interval. Moreover, said processor causes channels to be arranged in the guide listing based on the number of points assigned to each channel for the particular time interval the guide is being displayed. Said processor is programmed to add "X" points to the currently tuned channel for the current time interval, where "X" is a predetermined number set as a matter of design choice. For example, "X" may be set equal to 100. In general, a greater value for "X" indicates that a greater user preference is ascribed to a currently tuned channel, and vice-versa. The added points are recorded in said memory under the control of processor.

## Brief description of the invention

Present invention explains a channel recommendation list generation method by modeling a prediction algorithm for IPTV applications. According to method, two different classification algorithms are generated. Since, users' present and past experiences give information of watching preferences; an algorithm for clustering users according to present and past experiences is generated. Moreover, user's channel watching behaviour should also be considered. Thus, an algorithm for user's watching preferences, on channel basis is generated. By combination of said classification algorithms, a successful channel recommendation list is created.

## Object of the invention

The object of the present invention is to provide a successful channel recommendation list for IPTV users.

Another object of the present invention is to generate a channel recommendation list prediction algorithm based clustering users into the same group according to present and past experiences.

Another object of the present invention is to cluster users into groups according to present and past experiences.

Another object of the present invention is to cluster users by calculating nearest mean with using k-means algorithm.

Another object of the present invention is to re-calculate the user groups in given time intervals.

Another object of the present invention is to generate a channel recommendation list prediction algorithm based on user's watching preferences on channel basis.

Another object of the present invention is to record currently watched channel for current user in every minute for every day.

Another object of the present invention is to calculate watching frequency of each channel for each user by summing all records of each channel for every sampled day for a given time frame.

Another object of the present invention is to construct a channel recommendation list based on users' present and past experiences and user's watching preferences in channel base.

## Detailed Description of the Invention

By the help of observations it is decided that, users' channel watching habits are directly related to their present and past experiences. Thus, users' future preferences can be estimated by using their present and past experiences regarding the content. Moreover, said preferences depend on time of the day, user needs and environment which means that, users generally watch news at the evening time of the day, movies at night time or talk-show programs on day time. Moreover for estimating a successful recommendation list, user's channel watching behavior should be taken into account since users tend to watch limited number of channels instead of scanning whole broadcast. By considering said observations, present invention describes a method to generate personalized TV program recommendation list using extracted user preferences, user features. Moreover, in present invention, classification based on users' present and past experiences and user's channel watching behavior are described in detail. By combination of these classifications, a prediction algorithm can be modeled and successful channel recommendation list can be generated.

Firstly, for classification of users according to their present and past experiences, similar users are clustered into same group according to their watching history within selected time intervals. Users watch different type of programs which have different contents in a day, for instance, as described above, users generally watch news in the evening and movies at night. Thus, this information should be considered in clustering, while making recommendation list prediction algorithm. For efficiency, small time intervals should be assigned (e.g. 5 minutes, 60 minutes). However, determination of time interval length can vary according to expectations of users since user groups are calculated for each time interval according to their experiences until that moment. Moreover, for successful recommendation list by referencing the moment which recommendation list generation is requested, watching preferences of the past days before and after said reference moment should be considered. Furthermore, if time interval is represented as $(t-t_1, t+t_2)$, $t_2$ should be greater than $t_1$ since the watching preferences after that moment in past days have more importance for generating a recommendation list which is requested at said reference moment.

Vector space model is used for user clustering part of the prediction algorithm. Computation of similarity between user groups and current active user is based on feature vectors which represent user's TV watching preferences. In "k" dimensional $R^k$ feature vector space, watching preferences of user $U_1$ and user $U_2$ are defined as vectors $F_{u1}$ and $F_{U2}$, where $F_{U1}$ and $F_{U2}$ are defined as in the following equation Eq. 3.1;

$$F_{U_1} = (f_{1,U_1}, f_{2,U_1}, \ldots\ldots\ldots f_{k,U_1}) \in R^k$$
$$F_{U_2} = (f_{1,U_2}, f_{2,U_2}, \ldots\ldots f_{k,U_2}) \in R^k$$

$$\left.\begin{array}{c}\\\\\end{array}\right\}\quad \text{Eq. 3.1}$$

In Eq. 3.1, $f_{1,u1}$, represents occurrence frequency of selected feature of $U_1$, in other words watching frequency of a program type of user $U_1$, in given time frame. Thus, $f_{1,U1}$ is calculated by summing watching frequencies of a program between given time frame for all recorded days for each user. Namely, watching preference vectors are calculated with watching frequencies of program types for one user. This calculation is made for every active user. Thus, for each user, user profile information is calculated and stored in present invention. Contrary to prior art documents, program type information and content information are taken from a server by using internet protocol (IP), are not taken from EPG. By determination of watching preference vectors, the differences between these vectors are calculated using Eq. 3.2 for clustering algorithm.

$$d(U_1, U_2) = \left\| F_{U_1} - F_{U_2} \right\| \qquad \text{Eq. 3.2}$$

By calculating nearest mean using k-means algorithm (McQueen, 1967), users are clustered in different groups. According to clustered users, most frequently watched programs are constructed for each group and for a selected user, a recommendation list is created by using said frequently watched programs in most similar group to user. Created recommendation list can be represented with "n" dimensional channel vector in $R^n$ channel vector space where "n" represents number of channels in recommendation list and as an example $B_n$ represents the weight of $n^{th}$ channel in "n" dimensional vector. Said recommendation list according to clustered users is calculated by Eq. 3.3

$$B = \left[ B_1, B_2, \ldots\ldots B_n \right]_{nx1}^T \qquad \text{Eq. 3.3}$$

For clustering users in same group according to watching preferences, correct time interval selection is the key element.

As explained above, since clustering users into different groups according to present and past experiences is not enough for creating a successful recommendation list; user's watching behaviors should also be considered. The observations show that users tend to watch specific channels. Moreover, users zap among a limited number of channels instead of scanning whole broadcast channels. Thus, it is required to calculate an additional algorithm to consider user's watching preferences on channel basis. For this purpose, current watching channel for each user is recorded in every minute. These recorded data of each channel are summed using equation 3.4, for every sampled day for a given time frame to find watching frequency of each channel. Said recording action is done for active user, since, for each user, user profile information is calculated and stored in present invention.

$$C_p(j) = \sum_{i=0}^{m} g_{ij} \;,\; g_{ij} \in \{0,1\} \;\text{ and }\; j \in [0,1440) \qquad \text{Eq. 3.4}$$

In Eq. 3.4, "m" represents the number of sampled (recorded) days, "j" represents the time interval in minutes and "p" represents the channel number. The watching frequency of channel "p", for given time "j" and in days "m" is calculated by Eq. 3.4 for an active user. After calculating watching frequencies, frequencies for a given time period is computed by using equation 3.5.

$$A_p(j,t) = \sum_{k=j}^{j+t} C_p(k)$$

Eq. 3.5

By using Eq. 3.5, a recommendation list based on most frequently watched channels for given time frame for corresponding user is created. Said recommendation list is represented by "C" in "n" dimensional channel vector, in $R^n$ channel vector space. Said recommendation list according to user behavior, is represented by Eq. 3.6. In Eq. 3.6, "n" represents the number of channels in recommendation list and $C_n$ represents the weight of $n^{th}$ channel.

$$C = [C_1, C_2, \ldots \ldots C_n]_{nx1}^T$$

Eq. 3.6

After calculating the channel lists according to clustered users based on present and past experiences, B, and user's channel watching behavior, C, an algorithm which combines these calculated lists should be made to have final recommendation list. According to equation 3.7, said calculated channel lists are combined.

$$R = \arg\max_i(\alpha B + \beta C)$$

Eq. 3.7

In Eq. 3.7, "$\alpha$" and "$\beta$" represent normalization constants and "i" represents the channel number.

By clustering users according to present and past experiences and considering active user's channel watching behavior, a successful channel recommendation list can be generated. Since, content information of programs are taken from server, present invention is also suitable for real time programs. Moreover, as present invention comprises user profile application, information according to different users are recorded to related user profile and channel recommendation list of active user is generated. Moreover, channel recommendation list differs for each user according to watching preferences.

**Claims**

1. A channel recommendation list generation method by modeling a prediction algorithm for IPTV applications **characterized in that** it comprises the parts of;

   - clustering users into groups according to their present and past experiences which give information of watching preferences,
   - calculating current active user's watching preferences on channel basis,
   - creating channel recommendation list by combining the watching preference results of clustered users and channel based watching preference results of current active user.

2. A method according to claim 1 wherein, users are clustered by using each user's watching history within selected time intervals.

3. A method according to claim 2 wherein, said time intervals are determined by referencing requested moment and considering preferences of the past days before and after said reference moment.

4. A method according to claim 3 wherein, said time interval is represented by $(t-t_1, t+t_2)$ where t represents requested moment, $t_1$ and $t_2$ are variables to determine the time interval and $t_2 > t_1$.

5. A method according to claim 1 wherein, vector space model is used in the clustering part of the said prediction algorithm.

6. A method according to claim 5 wherein, similarity between user groups and current active user is computed based on feature vectors which represent user's TV watching preferences.

7. A method according to claim 6 wherein, said feature vectors for users are defined as;

$$F_{U_1} = (f_{1,U_1}, f_{2,U_1}, \ldots \ldots f_{k,U_1}) \in R^k$$

$$F_{U_2} = (f_{1,U_2}, f_{2,U_2}, \ldots \ldots f_{k,U_2}) \in R^k$$

where $f_{ku}$ represents the occurrence frequency of selected feature of user and $R^k$ represents the feature vector space.

8. A method according to claim 1 wherein, users are clustered by calculating nearest mean with using k-means algorithm.

9. A method according to claim 1 wherein, constructed recommendation list according to clustered users is represented by;

$$B = [B_1, B_2, \ldots \ldots B_n]_{nx1}^T$$

where "n" represents the number of channels in the channel list and $B_n$ represents the weight of $n^{th}$ channel.

10. A method according to claim 1 wherein, currently watched channel is recorded for current user in every minute.

11. A method according to claim 10 wherein, recorded data of each channel are summed for every sampled day for a given time frame by using equation;

$$C_p(j) = \sum_{i=0}^{m} g_{ij} \quad g_{ij} \in \{0,1\} \quad \text{and} \quad j \in [0,1440)$$

where "p" represents the channel number , "m" represents the number of sampled days and "j" represents the time interval in minutes.

12. A method according to claim 1 wherein, constructed recommendation list based on most frequently watched channels for given time frame for corresponding user is calculated by using equation;

$$A_p(j,t) = \sum_{k=j}^{j+t} C_p(k)$$

13. A method according to claim 12 wherein said constructed recommendation list is represented by;

$$C = [C_1, C_2, \ldots \ldots C_n]_{nx1}^T$$

where "n" represents the number of channels in the channel list and $C_n$ represents the weight of $n^{th}$ channel.

14. A method according to claim 1 wherein; combination of the results for creating said channel recommendation list is calculated by using equation;

$$R = \underset{i}{\arg\max}(\alpha B + \beta C)$$

where "$\alpha$" and "$\beta$" represent normalization constants and "i" represents the channel number.

$$R = \underset{i}{\arg\max}(\alpha B + \beta C)$$

| | Europäisches Patentamt  European Patent Office  Office européen des brevets | **EUROPEAN SEARCH REPORT** | Application Number  EP 10 19 3898 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X  Y | US 2006/161952 A1 (HERZ FREDERICK [US] ET AL) 20 July 2006 (2006-07-20)  * abstract *  * paragraph [0015] *  * paragraph [0228] - paragraph [0235] *  * paragraph [0255] - paragraph [0258] *  * paragraph [0265] - paragraph [0278] *  * figures 1-11 * | 1,2,5-9, 12-14  3,4,10, 11 | INV.  H04N5/445  H04N7/173  G06F17/30 |
| X  A | US 2004/098744 A1 (GUTTA SRINIVAS [US]) 20 May 2004 (2004-05-20)  * abstract *  * paragraph [0001] *  * paragraph [0004] - paragraph [0005] *  * paragraph [0024] - paragraph [0040] *  * paragraph [0047] *  * paragraph [0053] *  * paragraph [0057] *  * paragraph [0073] - paragraph [0075] *  * figures 1-8 * | 1  2-14 | |
| X  A | US 2002/116710 A1 (SCHAFFER JAMES DAVID [US] ET AL) 22 August 2002 (2002-08-22)  * abstract *  * paragraph [0017] - paragraph [0027] *  * figures 1-5 * | 1,2  3-14 | TECHNICAL FIELDS SEARCHED (IPC)  H04N  G06F |
| X  A | US 2008/320510 A1 (WONG CURTIS G [US] ET AL) 25 December 2008 (2008-12-25)  * abstract *  * paragraph [0002] - paragraph [0008] *  * paragraph [0023] - paragraph [0037] *  * paragraph [0042] *  * paragraph [0050] - paragraph [0052] *  * figures 1-8 * | 1  2-14 | |

-/--

The present search report has been drawn up for all claims

| Place of search | Date of completion of the search | Examiner |
|---|---|---|
| Munich | 30 May 2011 | Schreib, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 10 19 3898

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 2006/184967 A1 (MAYNARD STEPHEN L [US] ET AL) 17 August 2006 (2006-08-17) | 3,4,10, 11 | |
| A | * abstract * <br> * paragraph [0034] - paragraph [0035] * <br> ----- | 1,2,5-9, 12-14 | |
| Y | US 2002/083451 A1 (GILL KOMLIKA K [US] ET AL) 27 June 2002 (2002-06-27) | 3,4 | |
| A | * abstract * <br> * paragraph [0006] - paragraph [0009] * <br> * paragraph [0037] - paragraph [0063] * <br> * paragraph [0066] - paragraph [0075] * <br> * paragraph [0082] - paragraph [0086] * <br> * paragraph [0096] - paragraph [0099] * <br> * paragraph [0106] - paragraph [0115] * <br> * figures 1-16 * <br> ----- | 1,2,5-14 | |

TECHNICAL FIELDS
SEARCHED (IPC)

The present search report has been drawn up for all claims

| Place of search | Date of completion of the search | Examiner |
|---|---|---|
| Munich | 30 May 2011 | Schreib, Franz |

EPO FORM 1503 03.82 (P04C01)

**ANNEX TO THE EUROPEAN SEARCH REPORT
ON EUROPEAN PATENT APPLICATION NO.**

EP 10 19 3898

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2011

| Patent document cited in search report | | Publication date | Patent family member(s) | | Publication date |
|---|---|---|---|---|---|
| US 2006161952 | A1 | 20-07-2006 | NONE | | |
| US 2004098744 | A1 | 20-05-2004 | AU | 2003276551 A1 | 15-06-2004 |
| | | | CN | 1711773 A | 21-12-2005 |
| | | | EP | 1566059 A1 | 24-08-2005 |
| | | | WO | 2004047446 A1 | 03-06-2004 |
| | | | JP | 2006506886 T | 23-02-2006 |
| | | | KR | 20050086671 A | 30-08-2005 |
| US 2002116710 | A1 | 22-08-2002 | CN | 1457592 A | 19-11-2003 |
| | | | EP | 1364529 A2 | 26-11-2003 |
| | | | WO | 02067578 A2 | 29-08-2002 |
| | | | JP | 2004519902 T | 02-07-2004 |
| US 2008320510 | A1 | 25-12-2008 | NONE | | |
| US 2006184967 | A1 | 17-08-2006 | US | 2009254943 A1 | 08-10-2009 |
| US 2002083451 | A1 | 27-06-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2343076 B
- US 20060179455 A1
- US 7167895 B1
- US 7509663 B2
- WO 2006126988 A1